# DEMANDE DE BREVET EUROPEEN

(11) **EP 1 528 178 A1**
(43) Date de publication de la demande: **04.05.2005**
(21) Numéro de dépôt: 04292472.0
(22) Date de dépôt: 18.10.2004
(51) Int. Cl.: E04D 12/00, B32B 27/12

(54) **Ecran souple de sous-toiture et toiture comportant un tel ecran**

(30) Priorité: 31.10.2003 FR 0312817
(71) Demandeur: Icopal Sas, 75014 Paris (FR)
(72) Inventeur: Pion, Jean-François, 92500 Rueil Malmaison (FR); Hue, Bernard, 94430 Chenevieres-sur-Marne (FR)
(74) Mandataire: Michardière, Bernard

(57) **Abrégé**

Ecran souple (E) de sous-toiture destiné à être installé, au-dessous d'une toiture en pente, en lés qui se recouvrent sur leurs bords parallèles à une direction de mise en place, cet écran comprenant un parement extérieur réfléchissant (Ea), une couche intermédiaire étanche (Eb) comportant un liant déformable, telle qu'une couche bitumineuse, et un parement intérieur (Ec). Le parement intérieur (Ec) est faiblement émissif et constitué par un matelas fibreux (7) hydrophobe apte à retenir des gouttelettes d'eau (15) sans qu'elles diffusent dans ce matelas.

## Description

L'invention est relative à un écran souple de sous-toiture qui permet d'améliorer le confort d'été des occupants du bâtiment en évitant la surchauffe du volume intérieur, notamment des combles sous la toiture en pente.

Cet écran souple de sous-toiture, destiné à être installé au-dessous d'une toiture en pente en lés qui se recouvrent sur leurs bords parallèles à une direction de mise en place, comprend un parement extérieur ayant un pouvoir réfléchissant, une couche intermédiaire étanche comportant un liant déformable, telle qu'une couche bitumineuse, et un parement intérieur permettant une régulation hygrothermique.

Des écrans de sous-toiture sont mis en oeuvre de longue date dans de nombreuses toitures en pente. Ils permettent notamment de :
- constituer une protection temporaire, notamment à l'égard de la pluie, lors de l'élaboration de la couverture;
- reconduire à la gouttière et à l'égout des eaux provenant de la pluie, de la neige, des embruns ou autres qui ont pu s'infiltrer entre les éléments de couverture;
- participer à l'équilibre des pressions entre les éléments de couverture et l'intérieur de la construction;
- constituer une barrière mécanique s'opposant à l'intrusion, dans le bâtiment, de particules minérales, d'insectes ou autres.

Un tel écran est exposé non seulement à l'humidité provenant de l'atmosphère extérieure à la toiture, mais également à l'humidité provenant de l'intérieur du bâtiment et susceptible d'accéder jusque sous la toiture. Cette humidité intérieure a plusieurs origines parmi lesquelles :
- l'humidité résiduelle propre à un bâtiment en construction, provenant des matériaux hydrauliques utilisés lors de la construction (chapes, mortier, enduit, plâtre, peinture, bois de construction) ; cette humidité met environ deux années à s'évacuer complètement ;
- l'humidité générée par les occupants et l'activité dans la maison : humidité créée par la respiration, par la vapeur d'eau dégagée dans la cuisine ou dans la salle de bains ; cette humidité " intérieure " est susceptible de migrer et de s'accumuler sous la couverture dans certaines circonstances, notamment en cas de défaillance de l'étanchéité à l'air des parois de plafond et/ou des barrières à la vapeur d'eau;
- à certaines périodes de l'année, l'humidité contenue dans l'air circulant au-dessous de l'écran de sous-toiture.

L'écran de sous-toiture ne doit en aucun cas s'opposer à l'évacuation de cette humidité intérieure. D'une manière usuelle, pour un écran de type étanche, on prévoit une lame d'air ventilée en sous-face de l'écran imperméable pour permettre l'évacuation de l'humidité à l'extérieur.

Toutefois, dans certaines circonstances de température et d'humidité, de fines gouttelettes d'eau peuvent se former en sous-face et retomber vers l'intérieur du bâtiment, notamment sur une couche d'isolant thermique, ce qui entraîne à la longue des dégradations.

Un premier but de l'invention est d'éviter, ou tout au moins de réduire considérablement, la retombée de gouttelettes d'eau provenant de la sous-face de l'écran.

Une autre source de formation de gouttelettes en sous-couche réside dans les infiltrations d'eau possibles entre les lés de l'écran. Des remontées d'eau peuvent se produire par capillarité et atteindre la sous-face inférieure de l'écran, notamment lorsque les lés se recouvrent suivant des bords orthogonaux à la ligne de plus grande pente de la toiture si le parement intérieur de l'écran est constitué par un matériau absorbant. Pour combattre ce phénomène, on prévoit généralement un enduit de bitume élastomérique dans les zones de recouvrement des lés d'écran. Si de tels recouvrements s'opposent effectivement aux infiltrations par remontée capillaire, ils peuvent sous l'effet de la chaleur provoquer un collage entre les spires dans les rouleaux avant la mise en oeuvre des lés. Pour y remédier, il est nécessaire de recouvrir les zones enduites de bitume citées plus haut par un film de protection permettant la réalisation d'un joint « bitume sur film », mais ceci complique la fabrication et la pose des lés.

L'invention a pour but,surtout, de fournir un écran souple de sous-toiture possédant une réflectivité élevée qui évite au maximum les inconvénients rappelés ci-dessus.

Selon l'invention, un écran souple de sous-toiture du genre défini précédemment est caractérisé en ce que le parement intérieur est faiblement émissif et constitué par un matelas fibreux hydrophobe apte à retenir des gouttelettes d'eau sans qu'elles diffusent dans ce matelas.

Les gouttelettes d'eau ne tombent plus vers l'intérieur du bâtiment et se vaporisent lorsque les conditions de température et d'hygrométrie le permettent.

Avantageusement, le matelas fibreux hydrophobe est de couleur claire et constitué par une nappe de fibres non tissées de grammage total compris entre 80 et 180 g/m², de préférence 80 à 120 g/m².

Avantageusement, la surface spécifique du matelas fibreux hydrophobe est supérieure à 200 000 cm² par m² d'écran.

De préférence encore, une fraction au plus égale à la moitié de l'épaisseur du matelas fibreux, voisine de la couche intermédiaire, est imprégnée par cette couche alors que les fibres de la fraction tournée vers l'intérieur du bâtiment sont libres de toute imprégnation pour bien retenir les gouttelettes d'eau.

L'invention a également pour but de fournir,de préférence, un écran souple de sous-toiture qui permet d'améliorer le confort d'été des occupants du bâtiment en évitant la surchauffe du volume intérieur, notamment des combles sous la toiture en pente. En effet, les combles deviennent de plus en plus des locaux habitables au même titre que les étages inférieurs. Or,la limitation des flux naturels de l'air ambiant due à la forte densité d'immeubles freine les échanges thermiques qui se produisent naturellement entre le jour et la nuit et conduit à des surchauffes en été.

Selon une solution préférée, le parement supérieur est formé d'une couche ayant un pouvoir réfléchissant d'au moins 90%, de préférence 98%, de l'énergie incidente.

Un tel écran permet à la fois de résoudre le problème créé par l'humidité et les remontées capillaires et le problème du confort d'été des locaux.

Le parement supérieur peut avoir une épaisseur comprise entre 10 et 70 µ, de préférence 20 à 50 µ.

Le parement supérieur peut être constitué par une feuille métallique, en particulier en aluminium, notamment granité, ou en un autre métal ayant des propriétés de réflexion similaires à celles de l'aluminium.

Une feuille de liaison thermoplastique est avantageusement prévue entre la couche métallique formant parement extérieur et la couche intermédiaire étanche comportant un liant déformable.

Le parement supérieur peut être constitué par un film plastique de couleur claire et brillante, ou métallisé par dépôt sous vide d'une pellicule de particules métalliques.

L'invention est également relative à une toiture comportant un écran de sous-toiture tel que défini précédemment, tendu sous des contre-lattes s'étendant suivant la ligne de plus grande pente pour créer des canaux de circulation d'air entre la toiture et l'écran, ces canaux étant ouverts en partie inférieure et communiquant en partie haute avec l'extérieur, caractérisée en ce que la hauteur des canaux formés au-dessus de l'écran est supérieure ou égale à 20 mm, de préférence égale à environ 60 mm.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une vue schématique en coupe verticale partielle d'une toiture avec écran de sous-toiture selon l'invention.
Fig.2 est une vue en perspective avec partie enlevée ou arrachée d'une toiture avec écran de sous-toiture en cours de construction.
Fig.3 est une section partielle à plus grande échelle, de l'écran de sous-toiture selon l'invention.
Fig.4 est un schéma illustrant le recouvrement de lés orientés suivant la ligne de plus grande pente, et
Figs.5 et 6 sont des schémas illustrant un test de la propriété hydrophobe d'une nappe de matière.

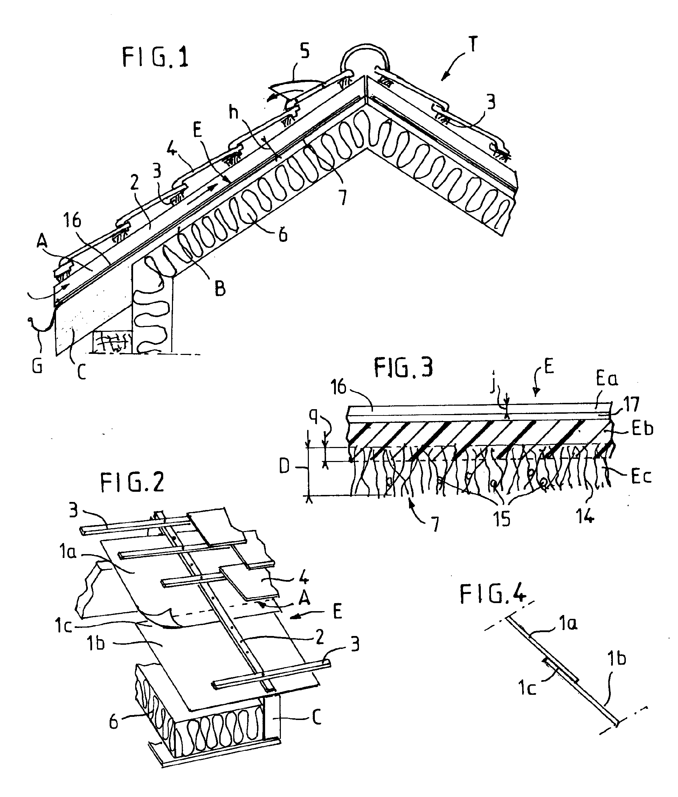

En se reportant à Fig.1 on peut voir une toiture T comportant des chevrons C en pente sur lesquels est tendu un écran de sous-toiture E, sous forme de lés 1a, 1b (Fig.2). Ces lés se recouvrent sur leurs bords parallèles à la direction de mise en place orthogonale à la ligne de plus grande pente de la toiture. En variante, les lés peuvent être orientés avec leur grande dimension parallèle à la ligne de plus grande pente et les bords qui se recouvrent sont alors parallèles à cette ligne.

Des contre-lattes 2, disposées au-dessus de l'écran E le long des chevrons C, servent à la fixation par clouage de l'écran E sur les chevrons. Des liteaux 3, orthogonaux à la ligne de plus grande pente, sont fixés parallèlement les uns aux autres sur les contre-lattes 2 et permettent l'accrochage des éléments de toiture 4, par exemple des tuiles ou des ardoises.

Une lame A d'air de ventilation est ainsi formée entre la face supérieure de l'écran E et la toiture. La hauteur h (Fig.1) de cette lame d'air A correspond à la hauteur de la contre-latte 2. La lame d'air A débouche en partie basse au-dessus de la gouttière G et en partie haute communique avec l'atmosphère extérieure, par exemple par un trou d'aération dans les combles du type chatière 5.La circulation ascendante d'air dans la lame A est symbolisée par des flèches sur Fig.1.

Une couche d'isolant thermique 6 est fixée au-dessous de l'écran E, à distance de cet écran de telle sorte qu'une autre lame d'air de ventilation B existe sous la face inférieure de l'écran E. La hauteur de cette lame B est généralement de l'ordre de 2cm.

L'écran E comprend un parement extérieur Ea, une couche intermédiaire étanche Eb comportant un liant déformable, telle qu'une couche bitumineuse, et un parement intérieur Ec. L'épaisseur totale de l'écran est de l'ordre de 0.6 mm.

L'écran souple E étant étanche à la vapeur d'eau, la présence de la lame d'air de ventilation B entre la couche isolante 6 et l'écran E est nécessaire, mais malgré la présence de cette lame B la formation de gouttelettes de condensation sur la face inférieure de l'écran E reste possible sous l'effet de l'humidité intérieure. En outre, comme illustré sur Fig.4 l'humidité provenant de l'extérieur peut remonter par capillarité dans la zone 1c de recouvrement entre un lé supérieur 1a et un lé inférieur 1b. Cette remontée d'humidité peut également contribuer à la formation de gouttelettes susceptibles de détériorer la couche isolante 6 et / ou l'intérieur du bâtiment.

Pour éviter ces inconvénients, notamment les remontées par capillarité sans avoir à enduire de bitume élastomérique les zones de recouvrement telles que 1c, selon l'invention le parement intérieur Ec est constitué par un matelas fibreux hydrophobe 7 apte à retenir des gouttes ou gouttelettes d'eau, sans qu'elles diffusent dans ce matelas.

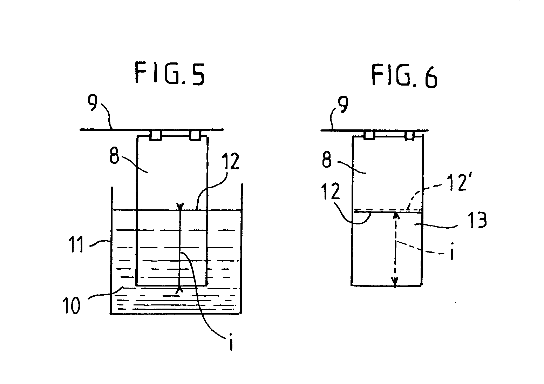

La caractéristique d'hydrophobie du matelas, nécessaire à l'invention, peut être soumise à un test illustré schématiquement sur Figs.5 et 6.

Pour déterminer si une nappe de matière fibreuse est satisfaisante pour constituer le parement inférieur selon l'invention, on prépare un échantillon 8 de la matière (les dimensions de cet échantillon sont par exemple de 200 x 50 mm) sur lequel on aura préalablement tracé une ligne horizontale 12, on pèse cet échantillon, et on le suspend à une barre support 9 munie de pinces. L'échantillon 8 vertical est plongé dans un bain 10 d'eau colorée, par exemple avec de l'éosine, dans une cuve 11, jusqu'à la ligne tracée 12 correspondant à la hauteur immergée i de l'échantillon 8, d'environ 50mm. Après un temps de séjour déterminé, par exemple de 24 heures au moins, dans le bain 10, l'échantillon 8 est retiré et maintenu suspendu dans un plan vertical. On examine alors la trace 12' de la limite supérieure de la zone humidifiée colorée par la reprise d'eau, et on pèse cet échantillon humidifié.

Un matériau hydrophobe satisfaisant aura une limite supérieure 12'voisine (en particulier distante de moins de 10 mm, de préférence moins de 5 mm) de la ligne 12 tracée initialement. En outre la zone 13 de l'échantillon 8 qui a été immergée devra retenir une quantité suffisante d'eau qui sera déterminée par différence entre les poids de l'échantillon 8 après et avant immersion. La quantité minimale d'eau que l'échantillon 8 doit retenir pour être satisfaisant est de l'ordre de 1g (un gramme) par cm3 de volume apparent de matière fibreuse.

Le matelas hydrophobe 7 est avantageusement constitué par une nappe de fibres 14 non tissées, de grammage total compris entre 80 et 180 g/m², de préférence 80 à 120 g/m².

Une fraction q (Fig.3) au plus égale à la moitié de l'épaisseur D du matelas fibreux, voisine de la couche intermédiaire bitumineuse Eb, est imprégnée par cette couche Eb. Sur leur fraction tournée vers l'intérieur du bâtiment, les fibres 14 sont libres de toute imprégnation et forment des pores qui communiquent entre eux et qui sont aptes à retenir des gouttelettes d'eau 15 sans qu'elles diffusent dans le matelas.

Avantageusement, la surface spécifique du matelas fibreux 7 est supérieure à 200 000 cm² par m² de matelas.

Le matelas fibreux 7 présente, après échauffement pendant 84 jours à une température de l'ordre de 60°C une déformation résiduelle inférieure à 0.2 %.

La couche intermédiaire Eb est insensible à l'humidité et possède une déformabilité suffisante pour garantir la durabilité du plan de jonction entre le parement extérieur et le parement intérieur de l'écran E malgré des coefficients de dilatation respectifs. Cette couche intermédiaire Eb constitue le corps étanche de l'écran E. Avantageusement, la couche Eb peut être formée par un mélange de polymère-bitume à faible module dont les caractéristiques de déformabilité ont été optimisées afin d'obtenir un liant déformable auto-réparable en cas de perforation par les clous et dont la température de ramollissement est supérieure à 90°C, de préférence supérieure à 100°C.

A titre d'exemple, le taux de polymère dans le bitume peut être compris entre 3% et 15% en poids, de préférence environ 8% en poids.

A titre d'exemple également, le matelas fibreux du parement inférieur Ec peut être constitué de fibres polyester, polyéthylène, polypropylène, plus généralement de fibres synthétiques non tissées.

Le parement supérieur Ea est formé de préférence par une couche 16 ayant un pouvoir réfléchissant d'au moins 90% de préférence 98% de l'énergie incidente, pour des températures comprises entre 20°C et 80°C, se situant essentiellement dans le domaine des longueurs d'onde infrarouge et dans le spectre solaire. L'épaisseur j de la couche 16 est avantageusement comprise entre 5 et 50 µ, de préférence 5 à 25 µ.

La couche 16 peut être constituée par une feuille métallique, en particulier en aluminium ayant un fort pouvoir réfléchissant et, par conséquent, un faible pouvoir émissif par rapport à celui du corps noir ou d'une couche sombre. La feuille 16 lorsqu'elle est métallique, peut être granitée, c'est-à-dire présenter des boursouflures qui augmentent sa surface spécifique et réduisent le risque de remontées capillaires au droit des joints de recouvrement 1c.

Dans le cas où la couche 16 est une feuille métallique, l'écran E comporte avantageusement une feuille de liaison thermoplastique 17 entre la couche métallique 16 et la couche intermédiaire étanche Eb. En variante, le parement supérieur Ea peut être constitué par un film en matière plastique de couleur claire et brillante, ou un film plastique métallisé par dépôt sous vide d'une pellicule de particules métalliques ayant un pouvoir réfléchissant suffisant.

La hauteur h de la lame d'air A est supérieure ou égale à 20 mm et de préférence d'environ 60 mm pour permettre un débit d'air suffisant comme expliqué plus loin.

Le matelas fibreux 7 est de préférence de couleur claire également, par exemple blanchâtre, de sorte que son pouvoir émissif est faible par rapport à une surface sombre, noirâtre.

Le comportement ou fonctionnement de l'écran de sous-toiture E est le suivant.

Comme il résulte des explications qui précèdent, la mise en place de cet écran E s'effectue de manière classique ; les contre-lattes utilisées 2 ont une hauteur h de l'ordre de 20 mm.

Le matelas fibreux 7 empêche, dans la zone de recouvrement 1c (Fig.4) les remontées d'humidité par capillarité en retenant l'eau sous forme de gouttelettes 15 (Fig. 3). Lorsque les conditions de température et d'hygrométrie le permettent, ces gouttelettes 15 se transforment en vapeur et sont évacuées dans le flux d'air de la lame B.

L'humidité intérieure du bâtiment qui peut parvenir jusqu'à ce matelas 7 est également retenue de sorte qu'il n'y a pratiquement pas de chute de gouttes sur la couche isolante 6 ou à l'intérieur du bâtiment.

En été, ou plus généralement lorsque la température extérieure est suffisamment élevée pour que le bâtiment ne nécessite pas du chauffage, l'énergie thermique irradiée par les éléments de couverture 4 sur la couche réfléchissante 16 constituant le parement extérieur est renvoyée vers la toiture et n'est donc pas transmise vers l'intérieur du bâtiment.

Dans un mode de réalisation d'une toiture utilisant l'écran E de la présente invention, la hauteur h des contre-lattes 2 est avantageusement augmentée jusqu'à une valeur de 60 mm ; ainsi le flux d'air convectif de lame d'air supérieure A porté à une température relativement élevée peut, grâce à l'augmentation de la hauteur h, s'échapper vers le haut par les trous d'aération, tels que les chatières 5, ce qui évite une accumulation de chaleur dans cette lame A, et sa transmission à travers l'écran E vers l'intérieur du bâtiment.

La lame d'air ventilée B en sous-face de l'écran E contribue positivement à la réduction de la température au-dessous de cet écran.

Des essais effectués sur des maquettes de bâtiment ont permis de mesurer, dans un local fermé sous combles, la température des lames d'air situées de part et d'autre de l'écran.

Dans un premier mode de réalisation traditionnel de la toiture comportant une lame d'air A ayant une hauteur de 20 mm, la température mesurée dans cette lame d'air entre un écran sombre et l'écran E selon l'invention était supérieure en moyenne de 2°C - avec un maximum de 5°C- et la température de la lame d'air sous l'écran B était inférieure en moyenne de 4°C - avec un maximum de 9°C.

Selon le mode préférentiel de réalisation de la toiture, la hauteur de la lame d'air A ayant été augmentée à 60 mm environ, la température mesurée dans cette lame d'air avec le même écran E selon l'invention est inférieure en moyenne de 3°C -avec un maximum de 7°C- à celle d'une lame d'air de 20 mm, et la température de la lame d'air sous l'écran B inférieure en moyenne de 1°C avec un maximum de 6°C.

En période hivernale, ou plus généralement en période de chauffage du bâtiment, le rayonnement thermique se propage de l'intérieur vers l'extérieur. En raison du faible pouvoir émissif de la couche 16, la transmission de chaleur vers l'extérieur (perte calorifique) est diminuée, et la température de la sous-face de l'écran E et de la lame d'air B est maintenue à une valeur supérieure à celle qui serait obtenue avec un écran classique dont la face supérieure serait sombre, avec un pouvoir émissif supérieur à celui de l'écran E. Les pertes de chaleur vers l'extérieur étant diminuées, le matelas fibreux inférieur 7 est maintenu à une température supérieure à celle de la lame d'air B. Ceci est favorable au maintien, sous forme vaporisée dans l'air ambiant de la lame B, d'une partie de l'humidité présente, l'autre partie étant retenue sous forme divisée dans la structure microporeuse de la couche 7 de parement de sous-face. L'eau ainsi piégée se vaporise et s'échappe de cette structure lors d'une élévation suffisante de température.

Le phénomène de capture d'eau par la structure 7, dans l'air humide circulant dans la lame d'air B peut également se produire au cours de périodes où l'air matinal est chargé d'humidité. La structure 7 en piégeant l'eau évite la chute de gouttelettes d'eau sur l'isolant 6. Lorsque le soleil se lève et que la température de la structure 7 augmente, les gouttes d'eau sont vaporisées et la vapeur d'eau est évacuée par le courant d'air circulant dans la lame B.

L'écran E conforme à l'invention associe aux propriétés adsorbantes d'un parement 7 de sous-face microporeux les performances complémentaires d'un parement de surface 16 à fort pouvoir réfléchissant et à faible émissivité, et contribue de manière significative à éviter, notamment lors des périodes hivernales, les désordres qui résultent de l'humidification de l'isolant thermique 6 au-dessus duquel est disposé l'écran E, et à accroître le confort d'été des locaux.

Les deux parements 7 et 16 sont associés au moyen d'une colle constituant la couche intermédiaire Eb formant le corps étanche de l'écran de sous-toiture, avec une déformabilité suffisante pour garantir la durabilité du plan de jonction, et permettre à cette couche intermédiaire de cicatriser spontanément autour des pointes (clous) qui perforeront l'écran E lors de la mise en place des autres éléments de la couverture (contre-lattes).

## Revendications

1. Ecran souple de sous-toiture destiné à être installé, au-dessous d'une toiture en pente, en lés qui se recouvrent sur leurs bords parallèles à une direction de mise en place, cet écran comprenant un parement extérieur réfléchissant (Ea), une couche intermédiaire étanche (Eb) comportant un liant déformable, telle qu'une couche bitumineuse, et un parement intérieur (Ec), **caractérisé en ce que** le parement intérieur (Ec) est faiblement émissif et constitué par un matelas fibreux (7) hydrophobe apte à retenir des gouttelettes d'eau (15) sans qu'elles diffusent dans ce matelas.

2. Ecran selon la revendication 1, **caractérisé en ce que** le matelas fibreux (7) hydrophobe est de couleur claire et constitué par une nappe de fibres (14) non tissées de grammage total compris entre 80 et 180 g/m², de préférence 80 à 120 g/m².

3. Ecran selon la revendication 1 ou 2, **caractérisé en ce que** la surface spécifique du matelas fibreux (7) hydrophobe est supérieure à 200 000 cm² par m² d'écran.

4. Ecran selon l'une des revendications précédentes, **caractérisé en ce qu'**une fraction (q) au plus égale à la moitié de l'épaisseur (D) du matelas fibreux, voisine de la couche intermédiaire (Eb), est imprégnée par cette couche alors que les fibres de la fraction tournée vers l'intérieur du bâtiment sont libres de toute imprégnation pour bien retenir les gouttelettes d'eau (15).

5. Ecran selon l'une des revendications précédentes, **caractérisé en ce que** le matelas fibreux (7) hydrophobe est propre à retenir 1g d'eau / cm3 de volume apparent du matelas.

6. Ecran selon l'une des revendications précédentes, **caractérisé en ce que** le parement supérieur (Ea) est formé d'une couche (16) ayant un pouvoir réfléchissant d'au moins 90%, de préférence 98%, de l'énergie incidente.

7. Ecran selon la revendication 6, **caractérisé en ce que** le parement supérieur (Ea) a une épaisseur comprise entre 10 et 70 µ, de préférence 20 à 50 µ.

8. Ecran selon la revendication 6 ou 7, **caractérisé en ce que** la couche (16) de parement supérieur est constituée par une feuille métallique, en particulier en aluminium ou en un autre métal ayant des propriétés de réflexion similaires à celles de l'aluminium, ayant une épaisseur comprise entre 5 et 50 µ, de préférence 5 à 25 µ.

9. Ecran selon la revendication 8, **caractérisé en ce qu'**une feuille de liaison thermoplastique (17) est prévue entre la couche métallique (16) formant parement extérieur et la couche intermédiaire étanche (Eb) comportant un liant déformable.

10. Ecran selon la revendication 6 ou 7, **caractérisé en ce que** la couche (16) de parement supérieur est constituée par un film plastique de couleur claire et brillante, ou métallisé par dépôt sous vide d'une pellicule de particules métalliques.

11. Toiture comportant un écran de sous-toiture selon l'une des revendications précédentes, tendu sous des contre-lattes (2) s'étendant suivant la ligne de plus grande pente pour créer des canaux de circulation d'air (A) entre la toiture et l'écran, ces canaux (A) étant ouverts en partie inférieure et communiquant en partie haute avec l'extérieur, **caractérisée en ce que** la hauteur (h) des canaux (A) formés au-dessus du sous-écran est supérieure à 20 mm, de préférence égale à environ 60 mm.
